# EUROPEAN PATENT SPECIFICATION

(11) **EP 3 378 685 B1**
(45) Date of publication and mention of the grant of the patent: **08.01.2020**
(21) Application number: 18162954.4
(22) Date of filing: 20.03.2018
(51) Int. Cl.: B60H 1/00, B60H 1/24, B60N 3/02

(54) **AIR CONDITIONING SYSTEM FOR A PUBLIC PASSENGER TRANSPORT VEHICLE**
KLIMAANLAGE FÜR EIN ÖFFENTLICHES PERSONENVERKEHRSFAHRZEUG
SYSTÈME DE CONDITIONNEMENT D'AIR POUR VÉHICULE DE TRANSPORT PUBLIC DE PASSAGERS

(30) Priority: 20.03.2017 IT 201700030572
(43) Date of publication of application: 26.09.2018
(73) Proprietor: IVECO FRANCE S.A.S., 69200 Vénissieux (FR)
(72) Inventor: CODRON, Stephane, 69008 Lyon (FR)
(74) Representative: Bongiovanni, Simone

(56) References cited:
- CN-A- 102 343 783
- CN-U- 204 712 929
- CN-U- 205 365 165
- CN-Y- 201 400 069
- US-A- 3 931 770

## Description

The present invention relates to an air conditioning system for a public passenger transport vehicle, preferably for an electric bus.

Public passenger transport vehicles comprise an air conditioning system configured for cooling in summer and heating in winter.

Regardless of the type of a propulsion of a vehicle (gas, diesel, hybrid, all electric), the fuel consumption of the air conditioning system is very significant in terms of cost of use and public health.

The comfort provided by the air conditioning may depend on several factors: the people themselves, their clothing and the air circulation. The latter is paramount to the passengers' perception of an air conditioning system.

Since cold air is traditionally circulated by air blowers located at a height such as to cool the head and feet, these blowers are not effective for hot air. The state of the art has demonstrated that floor-level air circulation is preferable in terms of comfort so manufacturers are thus forced to add air blowers on the walls of the vehicle at floor level.

On diesel and hybrid vehicles, the hot water used for heating comes from the engine. This water is located at floor level so the location of air blowers at floor level is quite appropriate.

However, on electric buses, without thermal engines, a simple solution for thermal comfort is to use a heat pump, usually installed on the roof. As a result, hot air comes at ceiling level.

This layout of the heat pump is optimal for cooling the vehicle. However, in the case of heating, this delivery of hot air at height is not comfortable for the passengers.

It is therefore necessary to divert the hot air to the floor of the vehicle 1 with dedicated pipes. This deviation of the conditioned air aids passenger comfort but increases costs and occupies more space in the interior of an electric vehicle.

Known solutions to such problems are shown in documents CN204712929 U, CN201400069 Y, CN205365165 U, CN 102343783 A or US 3931770 A.

The objects of this invention are to resolve the above-mentioned problems.

The above-mentioned objects are achieved by an air conditioning system for a public passenger transport vehicle according to claim 1.

Other characteristics and advantages of the invention will become apparent from the following non-limiting description, provided for illustrative purposes, with reference to the attached drawings in which:
- Figure 1 is a cross-section view of a public passenger transport vehicle comprising an air conditioning system according to the present invention;
- Figure 2 is a cross-section view of part of the system of Figure 1.
- Figure 3 is a side view and Figures 4-5 are perspective views of a first element of the system of Figure 1; and
- Figure 6 is a perspective view of a second element of the system of Figure 1.

The present invention is described as applied to an electric bus but may be applied to other types of public passenger transport vehicles without thereby incurring any loss of generality.

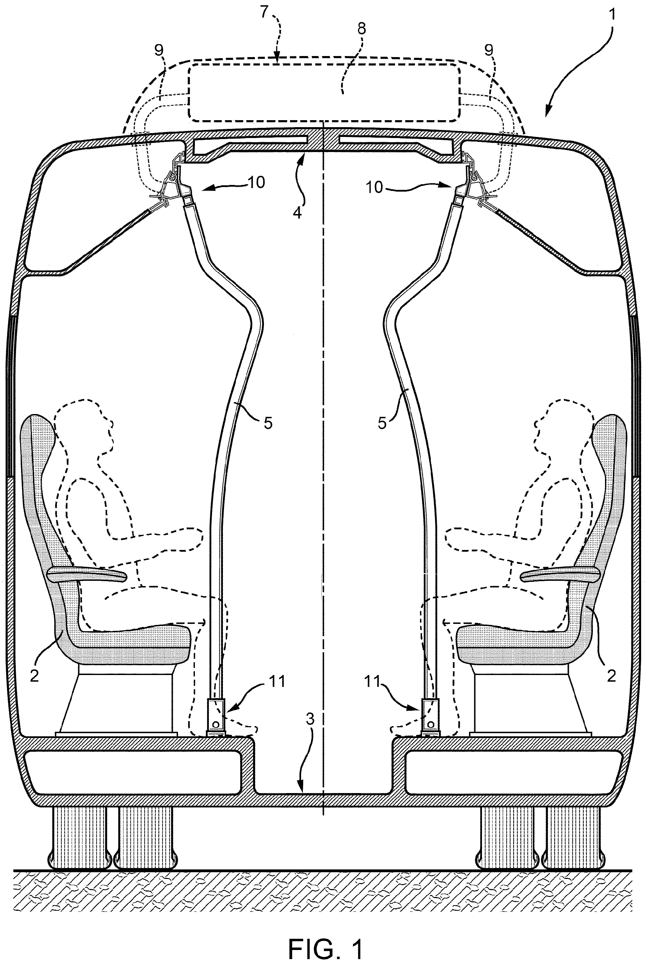

Figure 1 illustrates an electric bus 1 of known type, essentially comprising a plurality of seats 2 positioned in the interior of the bus 1.

In a known way and according to the distribution of seats, the bus 1 comprises a plurality of columns 5 configured to allow passengers to support themselves during their journey aboard the bus 1 and secured to the floor 3 and/or the ceiling 4 of the bus 1.

The bus 1 also comprises an air conditioning system 7 essentially comprising an air conditioning module 8 of known type configured to produce (hot or cold) conditioned air in order to condition the air inside the bus 1. The conditioned air is conducted into the interior of the vehicle 1 by pipes 9, in a known way.

In order to direct the flow of conditioned air, the air conditioning system 7 beneficially comprises said plurality of columns 5 and first and second joining means 10, 11 configured to connect each of said columns 5 respectively to the ceiling 4 and the floor 3 of the bus 1 and at the same time supply conditioned air from the air conditioning module 8 to the interior of the vehicle 1.

Each of the columns 5 is beneficially of known type, i.e. hollow, preferably cylindrical, and made from metal material.

Both the first and the second joining means 10, 11 are hollow and essentially comprise a portion configured to couple with said columns 5, a portion for joining to an element fixed with respect to the vehicle 1, and a portion configured to allow the sharing of a fluid located inside the joining means with the interior of the vehicle 1.

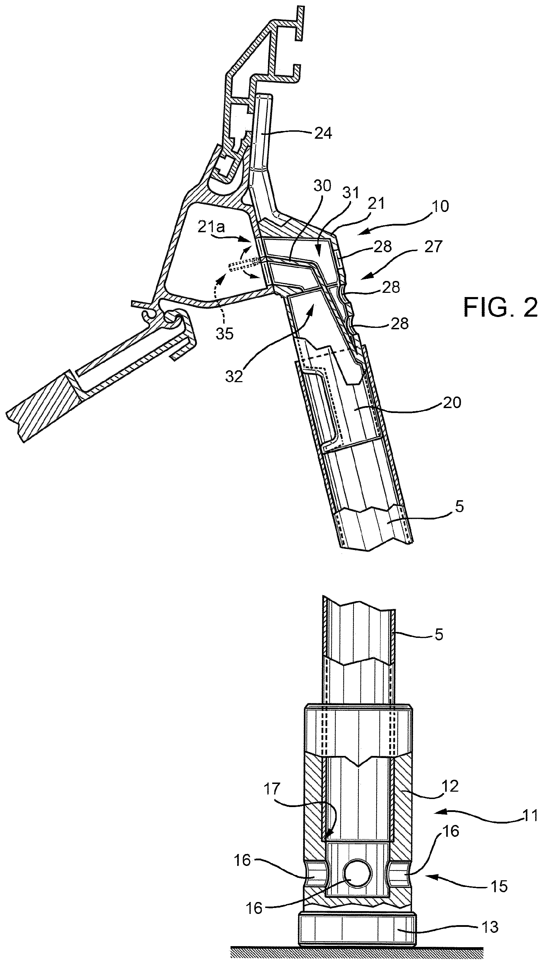

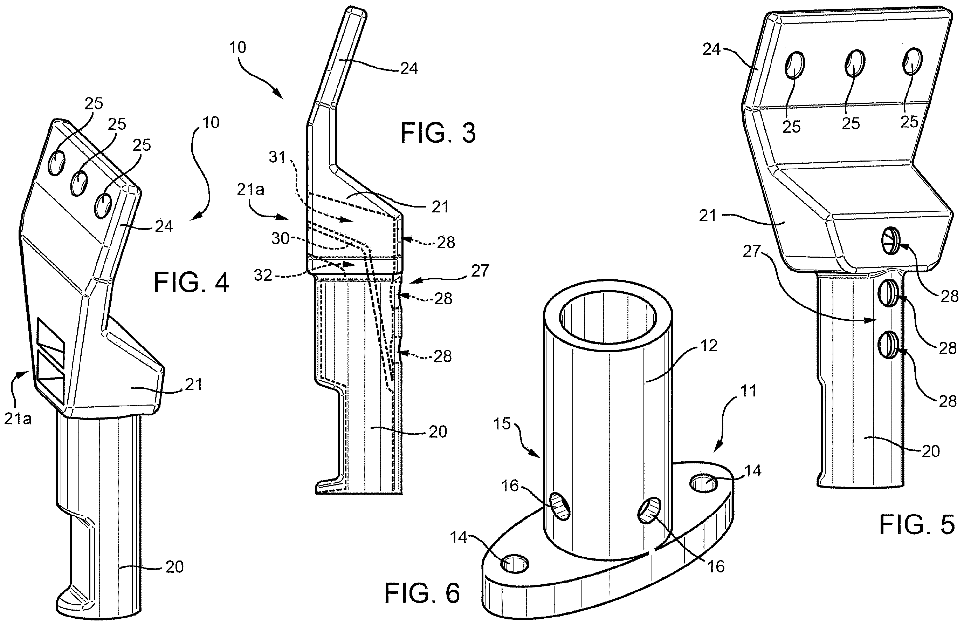

Each of the second joining means 11 preferably includes (Figures 2 and 6) a tubular portion 12 beneficially made in cylindrical shape so as to accommodate in its interior a bottom end of one of said columns 5.

A plurality of flanges 13 extend radially from a bottom end of the tubular portion 12 towards the exterior of the tubular portion 12. There are preferably two flanges 13, positioned diametrically with respect to each other. Each of said flanges 13 also comprises a joining hole 14 configured to accommodate a threaded element suitable to secure the joining means to the floor 3 of the vehicle 1.

The above-mentioned second joining means 11 also comprise a perforated portion 15, positioned between the tubular portion 12 and the flanges 13, configured to allow the sharing of a fluid located inside the joining means 11 with the interior of the vehicle 1.

The perforated portion 15 is preferably cylindrical with an outside diameter equal to, and an inside diameter less than that of the tubular portion 12 so as to form a step 17 configured to secure insertion of the bottom end of the column 5 inside of the second joining means 8.

The perforated portion comprises a plurality of holes 16 pierced through the cylindrical wall, preferably four holes positioned equally spaced from one other.

The holes 16 are beneficially longer than they are wide in order not to weaken the structure of the joining means 11 and, at the same time, to allow the passage of the air flow.

The second joining means 11 are beneficially monolithic and made from metal material.

Each of the first joining means 10 (Figures 2 to 5) preferably comprises a tubular portion 20 which is beneficially cylindrically shaped so as to accommodate in its interior a bottom end of one of said columns 5.

The first joining means 10 also comprises, from a top end of the tubular portion 20, a prismatic body 21 of substantially hollow trapezoidal section communicating with the tubular portion 20. The prismatic body 21 also comprises an opening 21a configured to communicate with a source of conditioned air.

A flange 24 extends from a top end of the prismatic body 21 towards the ceiling 4 of the vehicle 1. The flange 24 is preferably flat and rectangular in shape and comprises at least one hole 25 configured to accommodate a threaded element for securing the first joining means 10 to the ceiling 4 of the vehicle 1.

The above-mentioned first joining means 10 also comprises a perforated portion 27 extending partly over the prismatic body 21 and partly over the tubular portion 20. The perforated portion 27 comprises a plurality of holes 28, preferably three aligned holes, beneficially positioned opposite with respect to the opening 21a of the prismatic body 21.

The second joining means 11 also comprise a partition wall 30 positioned in the hollow space inside the first joining means 10 configured to separate the hollow space into two parts 31, 32.

A first part 31 of the internal space allows the sharing of a fluid between the opening 21a and the holes 28, a second part 32 of the internal space allows the delivery of a fluid from the opening 21a to the column 5.

The first joining means 10 beneficially comprises selective means of separating the conditioned air between the first part 31 and the second part 32. Said selective separation means preferably comprise a valve 35 mounted on the partition wall 30 and configured to prevent the passage of conditioned air between the opening 21a and one of the two parts 31, 32 of the interior space of the joining means 11.

The valve 35 can be controlled, in a known way, by an electronic unit, not shown.

The first joining means 10 are beneficially monolithic and made from metal material.

The first joining means 10 beneficially further comprises means of coupling with said top end of a column 5. These coupling means preferably comprise prismatic couplings 37 configured to secure the first joining means 10 to said column 5.

The prismatic coupling 37 may beneficially comprise a lug 38 provided inside the end of a column 5 and configured to be coupled with the corresponding housing 39 formed on the tubular portion 20 of the first joining means 10.

The operation of the air conditioning system 7 for a vehicle 1 for the public transport of passengers is the following.

If the air conditioning system 7 is to cool the interior of the vehicle 1, the electronic unit regulates the valve 35 so that cold air can circulate through the part 31 to the perforated portion 27 and thereby exit via the holes 28 and spread out from above into the interior of the vehicle.

If the air conditioning system 7 is to heat the interior of the vehicle 1, the electronic unit regulates the valve 35 so that the hot air can circulate through the part 32 to the inside of the column 5 and thus exit via the holes 16 of the perforated portion 15 and spread out from below into the interior of the vehicle.

From the foregoing, the benefits of the air conditioning system for a public passenger transport vehicle according to the present invention are apparent.

Thanks to the use of the above-described columns 5 and joining means 10, 11, the air conditioning system 7 can circulate hot air to the bottom of the vehicle 1 without the use of dedicated pipes.

The valve 35 makes it possible to manage the hot airflow or cold airflow so as to circulate the conditioned air to the top or bottom of the interior space of the vehicle 1.

In addition, in winter, the column 5 will be warmed by the air circulating inside it, thus being more comfortable for passengers supporting themselves by the column.

Finally, it is apparent that the air conditioning system for a public passenger transport vehicle according to the present invention may be subject to modifications and variations without thereby departing from the protective scope of the claims.

For example, the shape of the joining means 10, 11 or the columns 5 can be modified without however changing their functionality.

The system could also not use a valve 35 but instead use another device with an equivalent functionality. Finally, the coupling means 37 could comprise other coupling types, for example bayonet couplings.

## Claims

1. An air conditioning system (7) for a vehicle (1) for the public transport of passengers comprising a conditioned air source, wherein said system (7) comprises a plurality of support columns (5) for the passengers of said vehicle, and first and second means (10, 11) for joining each of said plurality of columns (5) to the ceiling (4) and to the floor (3) of said vehicle, each of said plurality of columns (5) being configured to allow the passage of said conditioned air to its interior, **characterized in that**,
each of said first joining means (10) being configured for joining a top end of one of said columns (5) to said conditioned air source, and **in that** said first and said second joining means (10, 11) are configured to allow the passage of said conditioned air towards the interior of said vehicle (1).

2. The system according to claim 1, **characterised in that** each of said first and said second joining means (10, 11) is hollow and comprises a coupling portion with one of said columns (5), a joining portion with an element fixed with respect to said vehicle (1) and a portion which allows the communication of said conditioned air with the interior of the vehicle (1).

3. The system according to claim 1 or 2, **characterised in that** each of said second joining means (11) essentially comprises a top portion (12) having a section configured to allow the bottom end of one of said columns (5) to be inserted therein, a bottom joining portion (13) being positioned below said top portion (12) and configured to secure said second joining means (11) to the floor (3) of said vehicle (1) and an intermediate portion (15), positioned between said bottom portion (13) and said top portion (12), which is perforated so that said conditioned air can circulate inside the vehicle (1) .

4. The system according to claim 2 or 3, **characterised in that** each of said first joining means (10) essentially comprises a bottom portion (20) having a section configured to be inserted inside the top ends of one of said columns (5), a top portion (24) with respect to said bottom portion configured to secure said first joining means (10) to the ceiling (4) of said vehicle (1), an intermediate portion (21) positioned between said top portion (24) and said bottom portion (20), comprising an opening (21a) configured to fluidly communicate with said conditioned air source.

5. The system according to claim 4, **characterised in that** said first joining means (10) comprise a perforated wall (27) which forms part of either or both of said bottom portion (20) and said intermediate portion (21) configured to allow said conditioned air to circulate inside the vehicle (1) .

6. The system according to claim 5, **characterised in that** said first joining means (10) comprise a partition wall (30) positioned inside the hollow space of said first joining means (10), said partition wall (30) dividing the interior space into a first part (31), which allows the passage of a fluid from said opening (21a) towards said perforated wall (27), and a second part (32) which allows the passage of a fluid from said opening (21a) to the interior of one of said columns (5).

7. The system according to claim 6, **characterised in that** said first joining means (10) comprise means for selectively separating the flow of said conditioned air to one of said first part and said second part 31, 32).

8. The system according to claim 7, **characterised in that** if said conditioned air is cooled, said selective separation means direct the flow towards said first part (31) and if said conditioned air is heated, said selective separation means direct the flow towards said second part (32) .

9. The system according to one of the previous claims, **characterised in that** said first and said second joining means (10, 11) comprise coupling means to the ends of one of said columns (5).

10. An electric vehicle for the public transport of passengers comprising a system according to one of the previous claims.

## Patentansprüche

1. Ein Klimaanlagensystem (7) für ein Fahrzeug (1) für den öffentlichen Personenverkehr, umfassend eine klimatisierte Luftquelle, wobei das System (7) eine Mehrzahl an Stützsäulen (5) für die Passagiere des Fahrzeugs und erste und zweite Mittel (10, 11), um jede der Mehrzahl der Stützsäulen (5) mit dem Dach (4) und dem Boden (3) des Fahrzeugs zu verbinden, umfasst, wobei jede der Mehrzahl der Stützsäulen (5) ausgeführt ist, um den Luftdurchtritt der klimatisierten Luft in ihr Inneres zu ermöglichen, **dadurch gekennzeichnet, dass** jedes der ersten Verbindungsmittel (10) ausgeführt ist, ein oberes Ende einer der Stützsäulen (5) mit der klimatisierten Luftquelle zu verbinden, und dass die ersten und die zweiten Verbindungsmittel (10, 11) ausgeführt sind, um den Luftdurchtritt der klimatisierten Luft in den Innenraum des Fahrzeugs (1) zu ermöglichen.

2. System nach Anspruch 1, **dadurch gekennzeichnet, dass** jedes der ersten und zweiten Verbindungsmittel (10, 11) hohl ist und einen Kupplungsabschnitt mit einer der Stützsäulen (5), ein Verbindungsabschnitt mit einem Element, welches in Bezug auf das Fahrzeug (1) befestigt ist, und einen Abschnitt, welcher die Kommunikation der klimatisierten Luft mit dem Innenraum des Fahrzeugs (1) ermöglicht, umfasst.

3. System nach Anspruch 1 oder 2, **dadurch gekennzeichnet, dass** jedes der zweiten Verbindungsmittel (11) im Wesentlichen einen oberen Abschnitt (12) mit einem Teilabschnitt, ausgeführt um das Einfügen des unteren Endes von einer der Stützsäulen (5) darin zu ermöglichen, einen unteren Verbindungsabschnitt (13), welcher unterhalb des oberen Abschnitts (12) positioniert und ausgeführt ist, um die zweiten Verbindungsmittel (11) an dem Boden (3) des Fahrzeugs (1) zu befestigen, und einen Zwischenabschnitt (15) umfasst, der zwischen dem unteren Abschnitt (13) und dem oberen Abschnitt (12) angeordnet ist und welcher perforiert ist, sodass die konditionierte Luft im Fahrzeug (1) zirkulieren kann.

4. System nach Anspruch 2 oder 3, **dadurch gekennzeichnet, dass** jedes der ersten Verbindungsmittel (10) im Wesentlichen einen unteren Abschnitt (20) mit einem Teilabschnitt, ausgeführt, um in die oberen Enden einer der Stützsäulen (5) eingeführt zu werden, einen oberen Abschnitt (24) in Bezug auf den unteren Abschnitt, ausgeführt, um die ersten Verbindungsmittel (10) an dem Dach (4) des Fahrzeugs (1) zu befestigen, und einen Zwischenabschnitt (21) umfasst, angeordnet zwischen dem oberen Abschnitt (24) und dem unteren Abschnitt (20) und eine Öffnung (21a) umfassend, die ausgeführt ist, um fluidisch mit der klimatisierten Luftquelle zu kommunizieren.

5. System nach Anspruch 4, **dadurch gekennzeichnet, dass** die ersten Verbindungsmittel (10) eine perforierte Wand (27) umfassen, welche einen Bestandteil von einem oder beiden von dem unteren Abschnitt (20) und dem Zwischenabschnitt (21) bilden, ausgeführt um das Zirkulieren der klimatisierten Luft im Fahrzeug (1) zu ermöglichen.

6. System nach Anspruch 5, **dadurch gekennzeichnet, dass** die ersten Verbindungsmittel (10) eine Trennwand (30) umfassen, die innerhalb des Hohlraums der ersten Verbindungsmittel (10) angeordnet ist, welche Trennwand (30) den Innenraum in einen ersten Teil (31), der den Durchgang eines Fluids von der Öffnung (21a) in Richtung der perforierten Wand (27) erlaubt, und einen zweiten Teil (32), der den Durchgang eines Fluids von der Öffnung (21a) in den Innenraum einer der Stützsäulen (5) ermöglicht, unterteilt.

7. System nach Anspruch 6, **dadurch gekennzeichnet, dass** die ersten Verbindungsmittel (10) Mittel zur selektiven Trennung des Stroms der klimatisierten Luft in einen der ersten und der zweiten Teile (31, 32) umfassen.

8. System nach Anspruch 7, **dadurch gekennzeichnet, dass**, falls die klimatisierte Luft gekühlt wird, die selektiven Trennmittel den Fluss in Richtung des ersten Teils (31) leiten, und falls die klimatisierte Luft beheizt wird, die selektiven Trennmittel den Fluss in Richtung des zweiten Teils (32) leiten.

9. System nach einem der vorstehenden Ansprüche, **dadurch gekennzeichnet, dass** die ersten und die zweiten Verbindungsmittel (10, 11) Kopplungsmittel zu den Enden einer der Stützsäulen (5) umfassen.

10. Ein elektrisches Fahrzeug für den öffentlichen Personenverkehr, umfassend ein System nach einem der vorstehenden Ansprüche.

## Revendications

1. Système de conditionnement d'air (7) pour un véhicule (1) destiné au transport public de passagers comprenant une source d'air conditionné, dans lequel ledit système (7) comprend une pluralité de colonnes de support (5) destinées aux passagers dudit véhicule, et des premiers et seconds moyens (10, 11) pour relier chacune de ladite pluralité de colonnes (5) au plafond (4) et au plancher (3) dudit véhicule, chacune de ladite pluralité de colonnes (5) étant configurée pour permettre le passage dudit air conditionné vers son intérieur, **caractérisé en ce que** chacun desdits premiers moyens de liaison (10) est configuré pour relier une extrémité supérieure de l'une desdites colonnes (5) à ladite source d'air conditionné, et **en ce que** lesdits premiers et lesdits seconds moyens de liaison (10, 11) sont configurés pour permettre le passage dudit air conditionné vers l'intérieur dudit véhicule (1).

2. Système selon la revendication 1, **caractérisé en ce que** chacun desdits premiers et desdits seconds moyens de liaison (10, 11) est creux et comprend une portion d'accouplement avec l'une desdites colonnes (5), une portion de liaison avec un élément fixe par rapport audit véhicule (1) et une portion qui permet la communication dudit air conditionné vers l'intérieur du véhicule (1).

3. Système selon la revendication 1 ou 2, **caractérisé en ce que** chacun desdits seconds moyens de liaison (11) comprend essentiellement une portion supérieure (12) ayant une section configurée pour permettre à l'extrémité inférieure de l'une desdites colonnes (5) d'être insérée dans celle-ci, une portion de liaison inférieure (13) étant positionnée sous ladite portion supérieure (12) et configurée pour fixer lesdits seconds moyens de liaison (11) au plancher (3) dudit véhicule (1) et une portion intermédiaire (15), positionnée entre ladite portion inférieure (13) et ladite portion supérieure (12), qui est perforée de telle sorte que ledit air conditionné peut circuler à l'intérieur du véhicule (1).

4. Système selon la revendication 2 ou 3, **caractérisé en ce que** chacun desdits premiers moyens de liaison (10) comprend essentiellement une portion inférieure (20) ayant une section configurée pour être insérée à l'intérieur des extrémités supérieures de l'une desdites colonnes (5), une portion supérieure (24) par rapport à ladite portion inférieure configurée pour fixer lesdits premiers moyens de liaison (10) au plafond (4) dudit véhicule (1), une portion intermédiaire (21) positionnée entre ladite portion supérieure (24) et ladite portion inférieure (20), comprenant une ouverture (21a) configurée pour communiquer de manière fluidique avec ladite source d'air conditionné.

5. Système selon la revendication 4, **caractérisé en ce que** lesdits premiers moyens de liaison (10) comprennent une paroi perforée (27) qui forme une partie de l'une ou l'autre, ou des deux, de ladite portion inférieure (20) et de ladite portion intermédiaire (21) configurée pour permettre audit air conditionné de circuler à l'intérieur du véhicule (1).

6. Système selon la revendication 5, **caractérisé en ce que** lesdits premiers moyens de liaison (10) comprennent une paroi de séparation (30) positionnée à l'intérieur de l'espace creux desdits premiers moyens de liaison (10), ladite paroi de séparation (30) divisant l'espace intérieur en une première partie (31), qui permet le passage d'un fluide depuis ladite ouverture (21a) vers ladite paroi perforée (27), et en une seconde partie (32) qui permet le passage d'un fluide depuis ladite ouverture (21a) vers l'intérieur de l'une desdites colonnes (5).

7. Système selon la revendication 6, **caractérisé en ce que** lesdits premiers moyens de liaison (10) comprennent un moyen pour séparer sélectivement l'écoulement dudit air conditionné vers l'une de ladite première partie et de ladite seconde partie (31, 32).

8. Système selon la revendication 7, **caractérisé en ce que** si ledit air conditionné est refroidi, ledit moyen de séparation sélective dirige l'écoulement vers ladite première partie (31) et si ledit air conditionné est chauffé, ledit moyen de séparation sélective dirige l'écoulement vers ladite seconde partie (32).

9. Système selon l'une des revendications précédentes, **caractérisé en ce que** lesdits premiers et lesdits seconds moyens de liaison (10, 11) comprennent un moyen d'accouplement aux extrémités de l'une desdites colonnes (5).

10. Véhicule électrique pour le transport public de passagers comprenant un système selon l'une des revendications précédentes.
